# NEUE EUROPÄISCHE PATENTSCHRIFT

(11) **EP 2 092 225 B2**
(45) Veröffentlichungstag und Bekanntmachung des Hinweises auf die Entscheidung über den Einspruch: **25.01.2017**
(45) Hinweis auf die Patenterteilung: 21.03.2012
(21) Anmeldenummer: 07846576.2
(22) Anmeldetag: 14.11.2007
(51) Int. Cl.: F16K 27/02, F16K 11/04, F16K 31/06

(54) **ABGABEVORRICHTUNG FÜR EIN WASSERABGABEGERÄT UND WASSERABGABEGERÄT MIT EINER ABGABEVORRICHTUNG**
DISPENSING ARRANGEMENT FOR A WATER DISPENSING DEVICE AND WATER DISPENSING DEVICE WITH A DISPENSING ARRANGEMENT
DISPOSITIF DE DISTRIBUTION POUR DISTRIBUTEUR D'EAU ET DISTRIBUTEUR D'EAU ÉQUIPÉ D'UN DISPOSITIF DE DISTRIBUTION

(30) Priorität: 22.12.2006 DE 102006062350
(43) Veröffentlichungstag der Anmeldung: 26.08.2009
(73) Patentinhaber: Alfred Kärcher GmbH & Co. KG, 71364 Winnenden (DE)
(72) Erfinder: HILD, Andreas, 70199 Stuttgart (DE); MAIER, Norbert, 71554 Weissach (DE)
(74) Vertreter: Hoeger, Stellrecht & Partner Patentanwälte mbB
(86) Internationale Anmeldenummer: PCT/EP2007/009822
(87) Internationale Veröffentlichungsnummer: WO 2008/083790

(56) Entgegenhaltungen:
- WO-A1-2005/068349
- AT-U1- 002 965
- DE-A1- 19 922 084
- DE-A1- 19 940 375
- DE-A1-102005 014 478
- DE-B3-102004 014 126
- DE-U1- 29 816 611
- FR-A- 634 957
- GB-A- 2 228 781
- GB-A- 2 357 751
- US-A- 1 354 582
- US-A- 1 745 189
- US-A- 2 289 632
- US-A- 4 267 947

## Beschreibung

Die Erfindung betrifft eine Abgabevorrichtung für ein Wasserabgabegerät, das insbesondere zur Abgabe von Trinkwasser ausgelegt ist, mit einer Ventileinrichtung, die einen dichtend an einen Ventilsitz anlegbaren Ventilkörper aufweist, und mit einem Abgabekörper, der einen ersten Einlass und einen mit dem ersten Einlass strömungsverbundenen zweiten Einlass zum Anschließen von Wasserzuleitungen aufweist sowie einen Auslass zum Abgeben von Wasser, der mit dem ersten Einlass und dem zweiten Einlass in Strömungsverbindung steht.

Außerdem betrifft die Erfindung ein Wasserabgabegerät mit einer Abgabevorrichtung, über die Wasser vom Wasserabgabegerät abgegeben werden kann.

Die Druckschriften US 4,267,947 und die GB 2 357 751 A beschreiben Abgabevorrichtungen für Flüssigkeitsabgabegeräte mit jeweils einem Einlass, einem mit diesem strömungsverbundenen Auslass und einer Ventileinrichtung zum Freigeben und Blockieren der Strömungsverbindung zwischen dem Einlass und dem Auslass.

In der US 2,289,632, US 1,354,582, FR 634 957 und der US 1,745,189 sind jeweils Dreiwegeventile zum Einbau in fluidischen Leitungssystemen beschrieben.

Aufgabe der vorliegenden Erfindung ist es, eine Abgabevorrichtung der eingangs genannten Art bereitzustellen, an deren Ventilsitz eine verbesserte Abdichtung erzielt werden kann, und die auf einfache und zuverlässige Weise von keimen und Mikroorganismen befreit werden kann. Diese Aufgabe wird durch eine Abgabevorrichtung mit den Merkmalen von Anspruch 1 gelöst.

Im Wasser, das am vom Ventilsitz gebildeten Strömungsumlenkelement in den Kanalabschnitt hineinströmt, bilden sich aufgrund der Änderung der Strömungsrichtung turbulente Verwirbelungen. Es hat sich in der Praxis gezeigt, dass sich vom Wasser mitgeführte Partikel aufgrund der Verwirbelungen bei einer Änderung der Strömungsrichtung von mindestens 90° nur mit geringer Wahrscheinlichkeit am Ventilsitz festsetzen können. Bleibt der Ventilsitz weitgehend frei von Partikeln, kann der Ventilkörper besonders eng daran anliegen. Dadurch kann am Ventilsitz der erfindungsgemäßen Abgabevorrichtung eine verbesserte Abdichtung erzielt werden.

Die Ventileinrichtung ist als elektromagnetisches Ventil ausgebildet und weist eine Spule mit darin gelagertem Spulenkern auf, der den Ventilkörper bildet. Ein elektromagnetisches Ventil ist einfach zu betätigen. Beim Beaufschlagen der Spule mit Strom kann sich der den Ventilkörper bildende Spulenkern relativ zur Spule und zum Kanalabschnitt verschieben. Dadurch kann er am Ventilsitz anliegen oder von diesem angehoben werden, um die Strömungsverbindung zwischen dem ersten und/oder dem zweiten Einlass und dem Auslass zu unterbinden bzw. freizugeben.

Der Abgabekörper ist einstückig ausgebildet. Dies erlaubt es, die Herstellungskosten für den Abgabekörper gering zu halten.

Der Abgabekörper ist außerdem aus einem wärmeleitfähigen und bei einer zur Pasteurisierung von Wasser erforderlichen Temperatur thermisch stabilen Material gefertigt. Unter "Pasteurisierung" wird vorliegend das Abtöten von sich im Wasser befindenden Keimen und Mikroorganismen durch Aufheizen des Wassers auf eine vorgegebene Temperatur für eine vorgegebene Mindestdauer verstanden. Beispielsweise kann die Abgabevorrichtung eine Baugruppe eines Wasserabgabegeräts bilden, mit dem ein Entkeimungsvorgang durchführbar ist, wobei die wasserführenden Komponenten des Wasserabgabegerätes für 15 Minuten mit heißem Wasser mit einer Temperatur von 65° C durchspült werden. Dadurch lassen sich an den wasserführenden Komponenten des Wasserabgabegerätes anhaftende Keime und Mikroorganismen abtöten. Die erfindungsgemäße Abgabevorrichtung kann in einen derartigen Entkeimungsvorgang mit einbezogen werden, indem sie zwischen dem ersten und dem zweiten Einlass mit dem heißen Wasser durchspült wird. Der Ventilkörper ist währenddessen vorzugsweise am Ventilsitz angeordnet. Dies verhindert, dass während des Entkeimungsvorgangs heißes Wasser vom Wasserabgabegerät abgegeben wird. Ist der Abgabekörper aus einem wärmeleitfähigen Material gefertigt, zum Beispiel einem Metall wie Aluminium, kann das heiße Wasser Wärme an den Abgabekörper abgeben. Dadurch kann sich dieser auch an seinen nicht mit dem heißem Wasser durchspülten Bereichen aufheizen. Die nicht durchspülten Bereiche können auf diese Weise ebenfalls entkeimt werden.

Vorzugsweise umfasst der Abgabekörper einen wannenartigen Bereich, in den der Kanalabschnitt mit seinem den Ventilsitz bildenden Ende hineinragt und der mindestens eine Durchflussöffnung aufweist, durch die bei nicht am Ventilsitz anliegendem Ventilkörper Wasser vom ersten Einlass oder vom zweiten Einlass zum Auslass strömen kann. In dem wannenartigen Bereich, der bevorzugt in der Draufsicht rund und noch bevorzugter zylindrisch ausgestaltet ist, können sich besonders gut Verwirbelungen des Wassers bilden, was die Wahrscheinlichkeit weiter verringert, dass sich Partikel am Ventilsitz festsetzen. Dieser lässt sich infolgedessen mit dem Ventilkörper noch besser abdichten. Die Bereitstellung des wannenartigen Bereichs hat außerdem den Vorteil, dass das Wasser über den gesamten Umfang des Ventilsitzes gleichmäßig verteilt in den Kanalabschnitt einströmen kann. Es bildet sich somit im Bereich des Ventilsitzes eine rotationssymmetrische Strömung aus, die die Gefahr von Ablagerungen am Ventilsitz weiter verringert.

Günstig ist es, wenn der Ventilkörper koaxial zum Kanalabschnitt ausgerichtet und relativ zu diesem verschiebbar ist, wobei er zur Anlage an den Ventilsitz von der dem Kanalabschnitt abgewandten Seite in den wannenartigen Bereich eintaucht. Beim Abdichten des Kanalabschnittes liegt der Ventilkörper am Ventilsitz an, von dem er beim Freigeben der Strömungsverbindung vom ersten und/oder zweiten Einlass zum Auslass durch Verschieben in eine vom Kanalabschnitt wegweisende Richtung entfernt wird. Die Verschiebung des Ventilkörpers gegenüber dem Kanalabschnitt kann durch technisch einfache Mittel bewerkstelligt werden. Die Abgabevorrichtung kann dadurch eine einfache Konstruktion aufweisen.

Wie bereits erwähnt, kann der wannenartige Bereich zylindrisch ausgebildet sein. Besonders günstig ist es, wenn der wannenartige Bereich zylindrisch ausgebildet und koaxial zum Kanalabschnitt ausgerichtet ist.

Vorzugsweise weist der Abgabekörper eine am wannenartigen Bereich angeordnete Stützfläche auf, an der die Ventileinrichtung anliegt.

Günstig ist es, wenn die Stützfläche den Rand der dem Kanalabschnitt abgewandten Seite des wannenartigen Bereiches umgibt. An der Stützfläche kann die Ventileinrichtung beispielsweise mittels einer Trägerplatte anliegen. Die Trägerplatte kann sich über den wannenartigen Bereich erstrecken und dadurch einen Deckel für den wannenartigen Bereich bilden. Dadurch kann die Trägerplatte zweierlei Funktionen übernehmen. Zum einen stützt sie die Ventileinrichtung ab und zum anderen begrenzt sie den wannenartigen Bereich. Eine derartige Ausführungsform der Abgabevorrichtung weist eine einfache Konstruktion auf.

Bei einer vorteilhaften Ausführungsform der erfindungsgemäßen Abgabevorrichtung ist die mindestens eine Durchflussöffnung am Ende einer Ausflussleitung gebildet, an deren anderem Ende der Auslass angeordnet ist. Das die Abgabevorrichtung durchströmende Wasser kann vom wannenartigen Bereich durch die Durchlassöffnung über die Ausflussleitung zum Auslass fließen. Mittels der Ausflussleitung kann ein wohl definierter Wasserabgabestrahl geformt werden.

Von Vorteil ist es, wenn der wannenartige Bereich zwei oder mehr Durchflussöffnungen aufweist, wobei jede Durchflussöffnung am Ende einer Leitung gebildet ist, an deren anderem Ende ein Einlass zum Anschließen einer Wasserzuleitung angeordnet ist. Diese Ausführungsform kann zusätzlich zum ersten Einlass und zum zweiten Einlass weitere Einlässe aufweisen, die jeweils über den wannenartigen Bereich mit dem Auslass in Strömungsverbindung stehen können. Bei Einsatz dieser Ausführungsform in einem Wasserabgabegerät können so eine Mehrzahl von Wasserzuleitungen an die Abgabevorrichtung angeschlossen werden. Denkbar sind zum Beispiel eine Heißwasserleitung, eine Kaltwasserleitung, eine Zuleitung für Wasser mit Raumtemperatur, eine Zuleitung für mit Kohlendioxid angereichertem Wasser etc.

Bevorzugt weist der Abgabekörper eine Verbindungsleitung auf, die den ersten Einlass mit dem zweiten Einlass verbindet und von der der Kanalabschnitt abzweigt. Hierbei handelt es sich um eine konstruktiv einfache Ausführungsform. Der von der Verbindungsleitung abzweigende Kanalabschnitt kann beispielsweise eine Wand eines an die Verbindungsleitung angeformten wannenartigen Bereiches durchgreifen. Der Abgabekörper kann dadurch eine kompakte Bauform aufweisen.

Bei einer bevorzugten Ausführungsform ist der Auslass an dem dem Ventilsitz abgewandten Ende des Kanalabschnittes angeordnet.

Günstig ist es, wenn die wasserführenden Komponenten der Abgabevorrichtung mit einer keimwachstumshemmenden Beschichtung versehen sind. Dadurch ist dem Wachstum von Keimen, die sich an den wasserführenden Komponenten festsetzen können, vorgebeugt. Denkbar sind beispielsweise Beschichtungen mit elementarem Silber, die eine keimabtötende Wirkung haben.

Wie eingangs erwähnt, betrifft die Erfindung auch ein Wasserabgabegerät mit einer erfindungsgemäßen Abgabevorrichtung, über die Wasser vom Wasserabgabegerät abgegeben werden kann.

Die nachfolgende Beschreibung bevorzugter Ausführungsformen der Erfindung dient im Zusammenhang mit der Zeichnung der näheren Erläuterung. Es zeigen:
- Figur 1:: eine perspektivische Ansicht einer ersten Ausführungsform der erfindungsgemäßen Abgabevorrichtung;

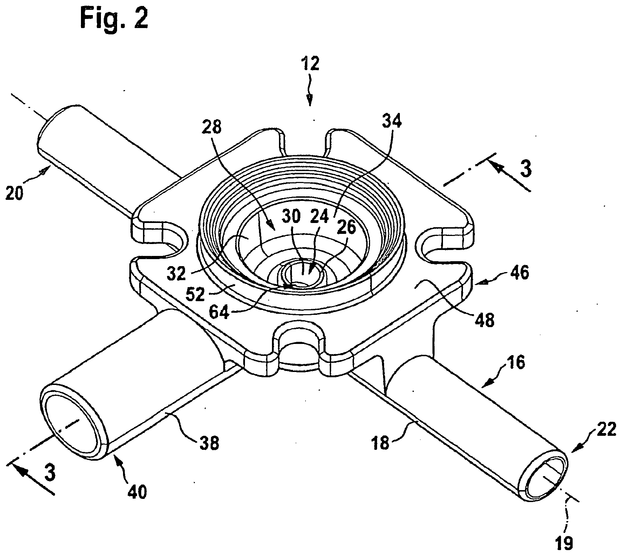

- Figur 2:: eine perspektivische Ansicht eines Abgabekörpers der Abgabevorrichtung aus Figur 1;
- Figur 3:: eine Schnittansicht des Abgabekörpers längs der Linie 3-3 in Figur 2;
- Figur 4:: eine Schnittansicht der Abgabevorrichtung längs der Linie 4-4 in Figur 1;
- Figur 5:: eine Schnittansicht einer zweiten Ausführungsform der erfindungsgemäßen Abgabevorrichtung und
- Figur 6:: eine perspektivische Ansicht eines Abgabekörpers der Abgabevorrichtung aus Figur 5.

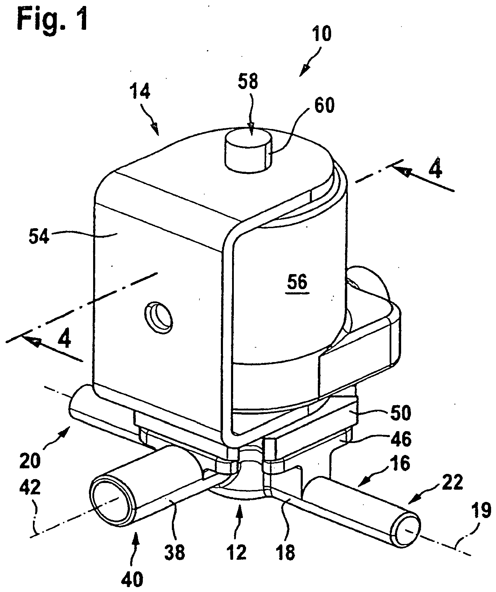

Eine erste bevorzugte Ausführungsform der erfindungsgemäßen Abgabevorrichtung ist in Figur 1 dargestellt und dort insgesamt mit dem Bezugszeichen 10 belegt. Die Abgabevorrichtung 10 bildet eine Baugruppe eines Wasserabgabegerätes, das insbesondere zur Abgabe von Trinkwasser, welches über die Abgabevorrichtung 10 abgegeben werden kann, ausgelegt ist.

Die Abgabevorrichtung 10 weist einen Abgabekörper 12 und eine daran angeordnete Ventileinrichtung 14 auf. Der Abgabekörper 12 ist einstückig aus Metall, vorzugsweise aus Aluminium gefertigt. Er umfasst einen geradlinigen Strömungskanal 16, der eine Verbindungsleitung 18 zwischen einem ersten Einlass 20 und einem zweiten Einlass 22 bildet. An den ersten Einlass 20 und den zweiten Einlass 22 können Wasserzuleitungen angeschlossen werden.

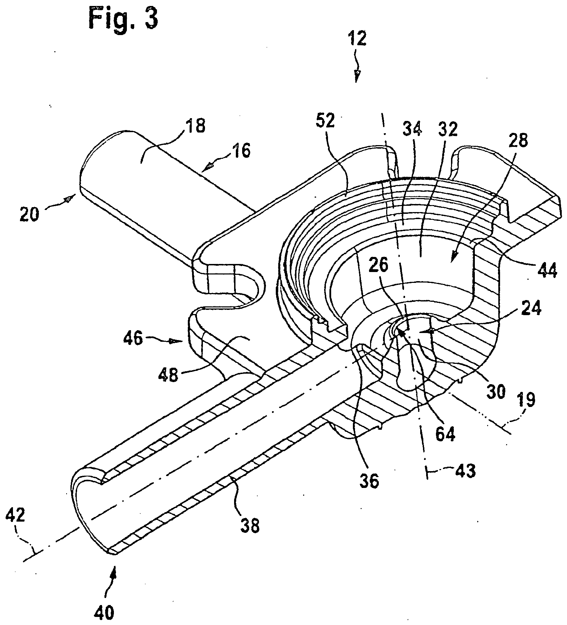

Wie insbesondere in Figur 3 erkennbar ist, zweigt in der Mitte zwischen dem ersten Einlass 20 und dem zweiten Einlass 22 vom Strömungskanal 16 in einer zu dessen Achse 19 radialen Richtung ein Rohransatz 24 ab, dessen dem Strömungskanal 16 abgewandtes Rohransatzende 26 die Wand eines an den Strömungskanal 16 angeformten wannenartigen Bereiches 28 des Abgabekörpers 12 durchgreift und in diesen hineinragt. Auf diese Weise ist durch den Rohransatz 24 vom Strömungskanal 16 bis zum Rohransatzende 26 ein Kanalabschnitt 30 gebildet, über den Wasser vom ersten Einlass 20 und vom zweiten Einlass 22 in den wannenartigen Bereich 28 einströmen kann.

Der wannenartige Bereich 28 ist als näherungsweise zylindrischer Topf 32 ausgebildet und koaxial zum Rohransatz 24 ausgerichtet. An seiner dem Rohransatzende 26 abgewandten Seite weist der Topf 32 eine Eingriffsöffnung 34 auf. Über eine seitliche Durchflussöffnung 36 steht vom Topf 32 radial eine Ausflussleitung 38 ab, an deren anderem Ende ein Auslass 40 zum Abgeben von Wasser angeordnet ist. Der Auslass 40 steht über die Ausflussleitung 38, den Topf 32, den Rohransatz 24 und den Strömungskanal 16 mit dem ersten Einlass 20 und dem zweiten Einlass 22 in Strömungsverbindung.

Über die langgezogen ausgestaltete Ausflussleitung 38 lässt sich bei der Abgabe von Wasser durch die Abgabevorrichtung 10 ein wohl definierter Wasserabgabestrahl formen.

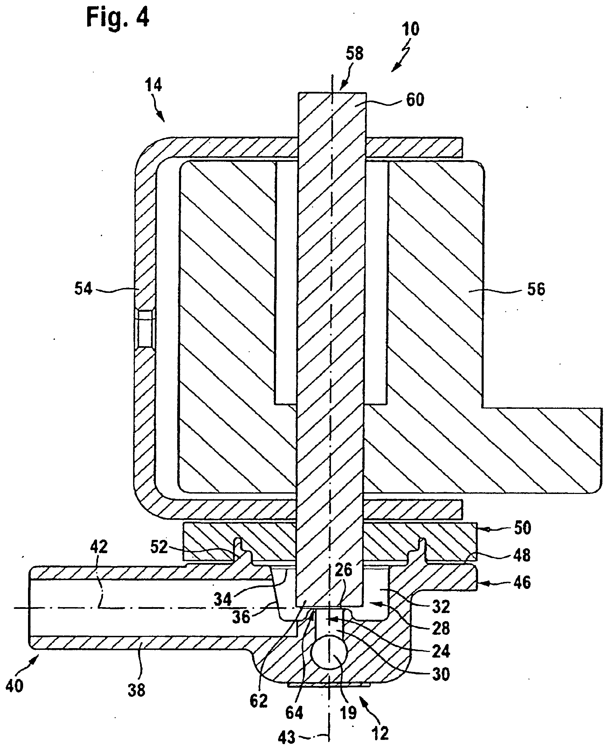

Eine Achse 42 der Ausflussleitung 38 ist senkrecht zu einer Achse 43 des Rohransatzes 24 ausgerichtet. Das Rohransatzende 26 ragt so weit in den Topf 32 hinein, dass es der Mitte der Durchflussöffnung 36, durch die die Achse 42 der Ausflussleitung 38 verläuft, gegenüberliegt (Figuren 3 und 4). Auf diese Weise bildet das Rohransatzende 26 ein Strömungsumlenkelement, an dem eine Änderung der Strömungsrichtung des vom ersten Einlass 20 und vom zweiten Einlass 22 zum Auslass 40 strömenden Wassers um 90° erfolgt. Durch die Änderung der Strömungsrichtung des Wassers bilden sich am Rohransatzende 26 Verwirbelungen im Wasser. Infolge der in der Draufsicht runden und insbesondere zylindrischen Ausgestaltung des Topfes 32 kann das Wasser am Rohransatzende 26 im Kreis strömen, was die Verwirbelungen begünstigt. Vom Wasser mitgeführte Partikel setzen sich aufgrund der Verwirbelungen nur mit geringer Wahrscheinlichkeit am Rohransatzende 26 fest.

Einen Rand 44 der Eingriffsöffnung 34 umgebend weist der Abgabekörper 12 einen Anlageflansch 46 auf, der eine Stützfläche 48 für die Ventileinrichtung-14 bildet. Die Ventileinrichtung 14 liegt über eine Trägerplatte 50 an der Stützfläche 48 an. Die Trägerplatte 50 bildet im Bereich der Eingriffsöffnung 34 eine Wand des Topfes 32. Ein den Rand 44 umlaufender Ringkragen 52, der mit der Trägerplatte 50 in Eingriff steht, sorgt für einen guten Sitz der Trägerplatte 50 an der Stützfläche 48.

Die Ventileinrichtung 14 ist elektromagnetisch betätigbar und umfasst einen an der Trägerplatte 50 festgelegten Montagewinkel 54, an dem eine Spule 56 gehalten ist, in der ein Spulenkern 58 verschieblich gelagert ist. Der Spulenkern 58 bildet einen als Ventilstift 60 ausgebildeten Ventilkörper, der den Montagewinkel 54, die Trägerplatte 50 und die Eingriffsöffnung 34 durchgreift, so dass er von der dem Rohransatz 24 abgewandten Seite in den Topf 32 eintaucht. Mit seinem dem Rohransatzende 26 zugewandten Ventilstiftende 62 kann der Ventilstift 60 am Rohransatzende 26 anliegen, so dass das Rohransatzende 26 einen Ventilsitz 64 für den Ventilstift 60 bildet. Der Ventilstift 60 ist koaxial zum Rohransatz 24 ausgerichtet.

In seiner Ruhestellung liegt der Ventilstift 60 am Ventilsitz 64 an, so dass die Strömungsverbindung zwischen dem ersten Einlass 20 und dem Auslass 40 sowie zwischen dem zweiten Einlass 22 und dem Auslass 40 unterbunden ist. Die Strömungsverbindung zwischen dem ersten Einlass 20 und dem zweiten Einlass 22 durch den Strömungskanal 16 bleibt dabei bestehen. Mittels der Spule 56 kann der Ventilstift 60 vom Ventilsitz 64 angehoben und somit die Strömungsverbindung zwischen dem ersten Einlass 20 sowie dem zweiten Einlass 22 mit dem Auslass 40 wiederhergestellt werden. Wie erwähnt, setzen sich von dem am Ventilsitz 64 vorbeiströmenden Wasser mitgeführte Partikel aufgrund der Verwirbelungen im Wasser nur mit geringer Wahrscheinlichkeit am Ventilsitz 64 ab. Dadurch kann bei Anlage des Ventilstifts 60 am Ventilsitz 64 zwischen dem Ventilsitz 64 und dem Ventilstift 60 eine besonders gute Abdichtung erzielt werden.

Der metallische Abgabekörper 12 ist bei einer zur Pasteurisierung von Wasser erforderlichen Temperatur thermisch stabil. Unter "Pasteurisierung" wird vorliegend das Abtöten von sich im Wasser befindenden Keimen und Mikroorganismen durch Aufheizen des Wassers auf eine vorgegebene Temperatur für eine vorgegebene Mindestdauer verstanden.Mittels aufgeheizten Wassers kann der Abgabekörper 12 selbst bei geschlossener Ventileinrichtung, d.h. bei am Ventilsitz 64 anliegendem Ventilstift 60, thermisch entkeimt werden. Dies geschieht zum Beispiel dadurch, dass der Strömungskanal 16 mit heißem Wasser durchspült wird, das eine zur Pasteurisierung des Wassers erforderliche Temperatur aufweist. Das heiße Wasser kann seine Wärme an den Abgabekörper 12 abgeben. In Folge dessen Wärmeleitfähigkeit werden selbst die nicht vom Wasser durchspülten Bereiche des Abgabekörpers 12, insbesondere der Topf 32 und die Ausflussleitung 38, aufgeheizt. Durch das Aufheizen lassen sich damit an allen wasserführenden Bereichen des Abgabekörpers 12 festgesetzte Keime und Mikroorganismen abtöten. Bei einer Ausgestaltung der Abgabevorrichtung 10 hat es sich zum Erzielen eines guten Entkeimungsergebnisses als ausreichend erwiesen, den Strömungskanal 16 für 15 Minuten mit heißem Wasser von einer Temperatur von 65° C zu durchspülen.

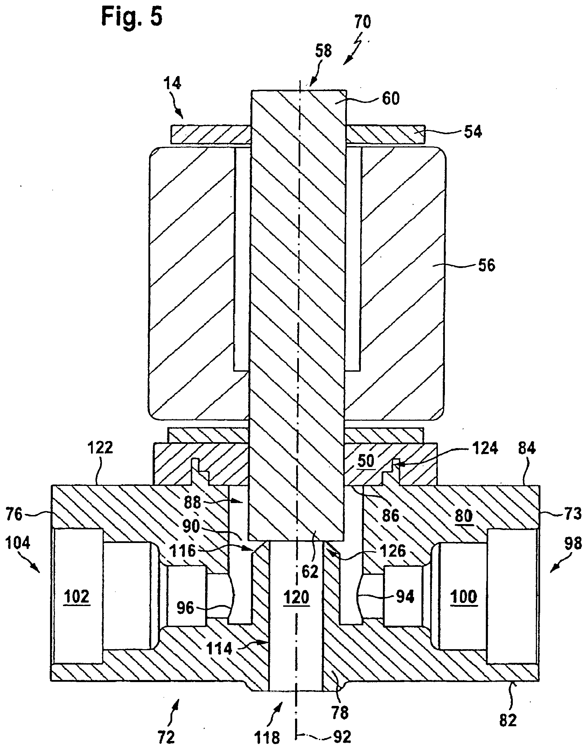

In Figur 5 ist eine zweite Ausführungsform einer erfindungsgemäßen Abgabevorrichtung dargestellt und insgesamt mit dem Bezugszeichen 70 belegt. Sie weist ebenfalls eine Ventileinrichtung 14 auf, wie sie voranstehend bereits erläutert wurde.

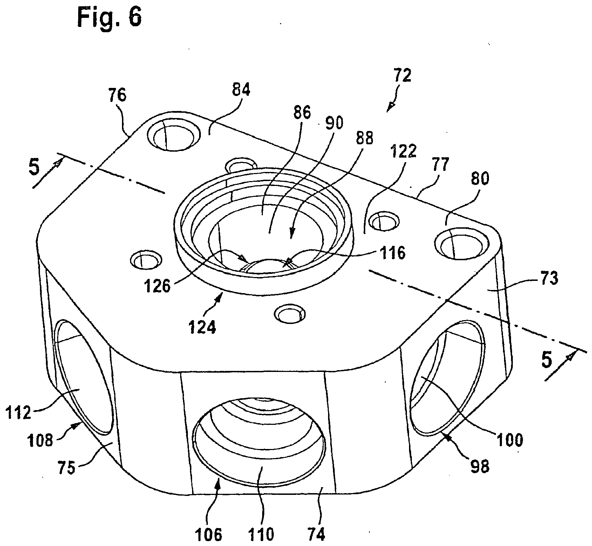

Die Abgabevorrichtung 70 umfasst einen Abgabekörper 72, der in Figur 6 perspektivisch dargestellt ist. Der Abgabekörper 72 ist einstückig aus Metall, vorzugsweise aus.Aluminium gefertigt und als unregelmäßiges fünfseitiges Prisma ausgebildet, dessen Seitenwände 73, 74, 75, 76 und 77 abgerundet ineinander übergehen. Die Seitenwände 73, 74, 75, 76 und 77 verbinden eine Bodenwand 78 mit einer Deckenwand 80, wobei die von der Bodenwand 78 gebildete Seitenfläche 82 des Abgabekörpers 72 parallel zu der von der Deckenwand 80 gebildeten Seitenfläche 84 des Abgabekörpers 72 ist. In der Mitte der Seitenfläche 84 befindet sich eine Eingriffsöffnung 86 in einen im Abgabekörper 72 gebildeten wannenartigen Bereich 88.

Der wannenartige Bereich 88 ist als zylindrischer Topf 90 ausgebildet, dessen Achse 92 äquidistant von den Seitenwänden 73, 74, 75 und 76 beabstandet ist und senkrecht auf den Seitenflächen 82 und 84 steht. Die Länge des Topfes 90 beträgt ungefähr 2/3 des gegenseitigen Abstandes der Seitenflächen 82 und 84. Der Topf 90 weist vier seitliche Durchflussöffnungen auf, von denen in der Zeichnung (Figur 5) nur zwei Durchflussöffnungen 94 und 96 zu sehen sind.

Der Topf 90 steht über die Durchflussöffnung 94 und einen sich in Richtung der Seitenwand 73 erweiternden Strömungskanal 100 mit einem in der Seitenwand 73 gebildeten ersten Einlass 98 in Strömungsverbindung. Ein weiterer Strömungskanal 102 verbindet den Topf 90 über die Durchflussöffnung 96 mit einem in der Seitenwand 76 gebildeten zweiten Einlass 104. In den Seitenwänden 74 und 75 sind ein dritter Einlass 106 bzw. ein vierter Einlass 108 gebildet, mit denen der Topf 90 über Strömungskanäle 110 bzw. 112, an deren Enden die beiden nicht gezeigten Durchflussöffnungen angeordnet sind, in Strömungsverbindung steht. Ebenso wie der Strömungskanal 100 erweitern sich die Strömungskanäle 102, 110 und 112 in Richtung der jeweiligen Seitenwand 76, 74 bzw. 75. An den ersten Einlass 98, den zweiten Einlass 104, den dritten Einlass 106 und den vierten Einlass 108 können Wasserzuleitungen angeschlossen werden.

Ein zum Topf 90 koaxial ausgerichtetes Rohrstück 114 erstreckt sich von der Bodenwand 78 in Richtung der Deckenwand 80, so dass es mit seinem stirnseitigen Rohrstückende 116 in den Topf hineinragt. Das Rohrstückende 116 ist dabei der Seitenfläche 84 näher gelegen als die Durchflussöffnungen 94 und 96 (ebenso wie die zwei nicht gezeigten Durchflussöffnungen, auf die im Folgenden kein Bezug mehr genommen wird).

An seinem dem Rohrstückende 116 abgewandten Ende umfasst das Rohrstück 114 einen in der Mitte der Seitenfläche 82 angeordneten Auslass 118 zum Abgeben von Wasser. Über den durch das Rohrstück 114 definierten Kanalabschnitt 120 steht der Topf 90 mit dem Auslass 118 in Strömungsverbindung. Auf diese Weise kann Wasser vom ersten Einlass 98, vom zweiten Einlass 104, vom dritten Einlass 106 und vom vierten Einlass 108 durch den Topf 90 hindurch zum Auslass 118 strömen.

Durch seine Anordnung relativ zu den Durchflussöffnungen 94 und 96 bildet das Rohrstückende 116 ein Strömungsumlenkelement, an dem eine Änderung der Strömungsrichtung des strömenden Wassers um 180° erfolgt. Dadurch bilden sich im strömenden Wasser Verwirbelungen, wobei die zylindrische Ausgestaltung des Topfes 90 die Bildung von Verwirbelungen begünstigt. Dadurch setzen sich vom Wasser mitgeführte Partikel nur mit geringer Wahrscheinlichkeit am Rohrstükkende 116 ab.

Die Seitenfläche 84 bildet eine Stützfläche 122, auf der die Ventileinrichtung 14 mit der Trägerplatte 50 anliegt. Die Trägerplatte 50 bildet im Bereich der Eingriffsöffnung 86 eine Wand des Topfes 90. Ein an der Stützfläche gebildeter Ringkragen 124 steht mit der Trägerplatte 50 in Eingriff und sorgt für einen guten Sitz derselben an der Stützfläche 122.

Der als Ventilstift 60 ausgebildete Spulenkern 58 der Ventileinrichtung 14 ist koaxial zum Topf 90 und zum Rohrstück 114 ausgerichtet. Er taucht, den Montagewinkel 54, die Trägerplatte 50 und die Eingriffsöffnung 86 durchgreifend, in den Topf 90 ein, so dass sein Stiftende 62 am Rohrstückende 116 anliegen kann. Auf diese Weise ist am Rohrstückende 116 ein Ventilsitz 126 gebildet. Liegt der Ventilstift 60 am Ventilsitz 126 an, so wird die Strömungsverbindung zwischen dem ersten Einlass 98, dem zweiten Einlass 104, dem dritten Einlass 106 und dem vierten Einlass 108 und dem Auslass 118 unterbunden. Mittels der Spule 56 kann der Ventilstift 60 vom Ventilsitz 126 angehoben und so die Strömungsverbindung zwischen dem Auslass 118 und dem ersten Einlass 98, dem zweiten Einlass 104, dem dritten Einlass 106 und dem vierten Einlass 108 wiederhergestellt werden. Wie erwähnt, setzen sich aufgrund der Verwirbelungen, die sich im am Ventilsitz 126 vorbeiströmenden Wasser bilden, am Ventilsitz 126 nur mit geringer Wahrscheinlichkeit vom Wasser mitgeführte Partikel ab. Dadurch kann bei am Ventilsitz 126 anliegenden Ventilstift 60 eine sehr gute Abdichtung erzielt werden.

Der Abgabekörper 72 ist wie der Abgabekörper 12 thermisch entkeimbar, indem er zwischen zumindest zwei der von dem ersten Einlass 98, dem zweiten Einlass 104, dem dritten Einlass 106 und dem vierten Einlass 108 gebildeten vier Einlässen mit heißem Wasser durchspült wird. Das heiße Wasser kann den Abgabekörper 72 an den durchspülten Bereichen aufheizen, der sich aufgrund seiner Wärmeleitfähigkeit auch an den nicht von heißem Wasser durchspülten Bereichen aufheizt. Dadurch kann der Abgabekörper 72 selbst bei geschlossener Ventileinrichtung 14, d.h. bei am Ventilsitz 126 anliegendem Ventilstift 60, zwischen dem Rohrstückende 116 und dem Auslass 118 entkeimt werden. Durch das weit in den Topf 90 heineinragende Rohrstück 114 wird die Wärme vom heißen Wasser besonders gut auf das Rohrstück 114 übertragen. Bei einer Ausgestaltung der Abgabevorrichtung 70 hat es sich zum Erzielen eines guten Entkeimungsergebnisses als ausreichend erwiesen, wenn der Abgabekörper 72 für 15 Minuten mit heißem Wasser mit einer Temperatur von 65° C durchspült wird.

Die vorstehend beschriebenen Abgabevorrichtungen 10 und 70 können, insbesondere an ihren wasserführenden Bereichen, mit einer keimwachstumshemmenden Beschichtung versehen sein, so dass dem Wachstum von Keimen, die sich an den wasserführenden Bereichen festsetzen können, vorgebeugt wird. Denkbar sind beispielsweise Beschichtungen, die elementares Silber umfassen, das eine keimabtötende Wirkung hat.

Die Erfindung betrifft auch ein Wasserabgabegerät mit einer Abgabevorrichtung, über die Wasser vom Wasserabgabegerät abgegeben werden kann, wobei das erfindungsgemäße Wasserabgabegerät eine der vorstehend beschriebenen Abgabevorrichtungen 10 oder 70 umfasst. Wenn das Wasserabgabegerät ausgelegt ist, einen thermischen Entkeimungsvorgang mittels heißem Wasser durchzuführen, können die Abgabevorrichtung 10 bzw. die Abgabevorrichtung 70 wie beschrieben thermisch entkeimt werden.

## Patentansprüche

1. Abgabevorrichtung für ein Wasserabgabegerät, das insbesondere zur Abgabe von Trinkwasser ausgelegt ist, mit einer Ventileinrichtung (14), die einen dichtend an einen Ventilsitz (64; 126) anlegbaren Ventilkörper (60) aufweist, und mit einem Abgabekörper (12; 72), der einen ersten Einlass (20; 98) und einen mit dem ersten Einlass (20; 98) strömungsverbundenen zweiten Einlass (22; 104) zum Anschließen von Wasserzuleitungen aufweist sowie einen Auslass (40; 118) zum Abgeben von Wasser, der mit dem ersten Einlass (20; 98) und dem zweiten Einlass (22; 104) in Strömungsverbindung steht, wobei die Strömungsverbindung zwischen den beiden Einlässen (20, 22; 98, 104) und dem Auslass (40; 118) über einen Kanalabschnitt (30; 120) erfolgt, der an einem stirnseitigen Ende (26; 116) den Ventilsitz (64; 126) für den Ventilkörper (60) trägt, wobei der Ventilsitz (64; 126) ein Strömungsumlenkelement ausbildet zur Änderung der Strömungsrichtung des vom ersten Einlass (20; 98) und/oder vom zweiten Einlass (22; 104) zum Auslass (40; 118) strömenden Wassers um mindestens 90°, wobei die Ventileinrichtung (14) als elektromagnetisches Ventil ausgebildet ist und eine Spule (56) mit darin gelagertem Spulenkern (58) aufweist, der den Ventilkörper (60) bildet, und wobei der Abgabekörper (12; 72) einstückig ausgebildet ist und aus einem wärmeleitfähigen und bei einer zur Pasteurisierung von Wasser erforderlichen Temperatur thermisch stabilen Material gefertigt ist.

2. Abgabevorrichtung nach Anspruch 1, **dadurch gekennzeichnet, dass** der Abgabekörper (12; 72) einen wannenartigen Bereich (28; 88) aufweist, in den der Kanalabschnitt (30; 120) mit seinem den Ventilsitz (64; 126) bildenden Ende (26; 116) hineinragt und der mindestens eine Durchflussöffnung (36; 94, 96) aufweist, durch die bei nicht am Ventilsitz (64; 126) anliegendem Ventilkörper (60) Wasser vom ersten Einlass (20; 98) oder vom zweiten Einlass (22; 104) zum Auslass (40; 118) strömen kann.

3. Abgabevorrichtung nach Anspruch 2, **dadurch gekennzeichnet, dass** der Ventilkörper (60) koaxial zum Kanalabschnitt (30; 120) ausgerichtet und relativ zu diesem verschiebbar ist, wobei er zur Anlage an den Ventilsitz (64; 126) von der dem Kanalabschnitt (30; 120) abgewandten Seite in den wannenartigen Bereich (28; 88) eintaucht.

4. Abgabevorrichtung nach Anspruch 2 oder 3, **dadurch gekennzeichnet, dass** der wannenartige Bereich (28; 88) zylindrisch ausgebildet und koaxial zum Kanalabschnitt (30; 120) ausgerichtet ist.

5. Abgabevorrichtung nach einem der Ansprüche 2 bis 4, **dadurch gekennzeichnet, dass** der Abgabekörper (12; 72) eine am wannenartigen Bereich (28; 88) angeordnete Stützfläche (48; 122) aufweist, an der die Ventileinrichtung (14) anliegt.

6. Abgabevorrichtung nach Anspruch 5, **dadurch gekennzeichnet, dass** die Stützfläche (48; 122) den Rand der dem Kanalabschnitt (30; 120) abgewandten Seite des wannenartigen Bereiches (28; 88) umgibt.

7. Abgabevorrichtung nach einem der Ansprüche 2 bis 6, **dadurch gekennzeichnet, dass** die mindestens eine Durchflussöffnung (36) am Ende einer Ausflussleitung (38) gebildet ist, an deren anderem Ende der Auslass (40) angeordnet ist.

8. Abgabevorrichtung nach einem der Ansprüche 2 bis 6, **dadurch gekennzeichnet, dass** der wannenartige Bereich (88) zwei oder mehr Durchflussöffnungen (94, 96) aufweist, wobei jede Durchflussöffnung (94, 96) am Ende einer Leitung (100, 102) gebildet ist, an deren anderem Ende ein Einlass (98, 104) zum Anschließen einer Wasserzuleitung angeordnet ist.

9. Abgabevorrichtung nach einem der voranstehenden Ansprüche, **dadurch gekennzeichnet, dass** der Abgabekörper (12) eine Verbindungsleitung (18) aufweist, die den ersten Einlass (20) mit dem zweiten Einlass (22) verbindet und von der der Kanalabschnitt (30) abzweigt.

10. Abgabevorrichtung nach einem der Ansprüche 1 bis 6 oder Anspruch 8, **dadurch gekennzeichnet, dass** der Auslass (118) an dem dem Ventilsitz (126) abgewandten Ende des Kanalabschnittes (120) angeordnet ist.

11. Abgabevorrichtung nach einem der voranstehenden Ansprüche, **dadurch gekennzeichnet, dass** die wasserführenden Komponenten der Abgabevorrichtung (10; 70) mit einer keimwachstumshemmenden Beschichtung versehen sind.

12. Wasserabgabegerät mit einer Abgabevorrichtung nach einem der voranstehenden Ansprüche.

## Claims

1. Dispensing arrangement for a water-dispensing appliance which is designed in particular for dispensing drinking water, the dispensing arrangement having a valve device (14) which has a valve body (60) adapted to be positioned with sealing action against a valve seat (64; 126), and having a dispensing body (12; 72) which has a first inlet (20; 98) and a second inlet (22; 104), flow-connected to the first inlet (20; 98), for the connection of water-feed lines and also has an outlet (40; 118) which is intended for dispensing water and is in flow connection with the first inlet (20; 98) and the second inlet (22; 104), wherein the flow connection between the two inlets (20, 22; 98, 104) and the outlet (40; 118) takes place via a channel portion (30; 120) which carries at a front side end (26; 116) the valve seat (64; 126) for the valve body (60), the valve seat (64; 126) forming a flow-deflecting element for changing the flow direction of the water flowing from the first inlet (20; 98) and/or from the second inlet (22; 104) to the outlet (40; 118) by at least 90°, wherein the valve device (14) is in the form of an electromagnetic valve and has a coil (56) with a coil core (58) mounted therein, this coil core (58) forming the valve body (60), and wherein the dispensing body (12; 72) is formed in one piece and is produced from a thermally conductive material which is thermally stable at a temperature necessary for pasteurizing water.

2. Dispensing arrangement according to claim 1, **characterised in that** the dispensing body (12; 72) has a basin-like region (28; 88) into which the channel portion (30; 120) projects by way of its end (26; 116) that forms the valve seat (64; 126) and which has at least one throughflow opening (36; 94; 96) through which water can flow from the first inlet (20; 98) or from the second inlet (22; 104) to the outlet (40; 118) when the valve body (60) is not engaging against the valve seat (64; 126).

3. Dispensing arrangement according to claim 2, **characterised in that** the valve body (60) is aligned coaxially in relation to the channel portion (30; 120) and is adapted to be displaced relative to the same, the valve body (60), for engagement against the valve seat (64; 126), penetrating into the basin-like region (28; 88) from the side which is directed away from the channel portion (30; 120).

4. Dispensing arrangement according to claim 2 or 3, **characterised in that** the basin-like region (28; 88) is cylindrical and is oriented coaxially in relation to the channel portion (30; 120).

5. Dispensing arrangement according to one of claims 2 to 4, **characterised in that** the dispensing body (12; 72) has a supporting surface (48; 122) which is disposed at the basin-like region (28; 88) and against which the valve device (14) engages.

6. Dispensing arrangement according to claim 5, **characterised in that** the supporting surface (48; 122) surrounds the periphery of that end of the basin-like region (28; 88) which is directed away from the channel portion (30; 120).

7. Dispensing arrangement according to one of claims 2 to 6, **characterised in that** the at least one throughflow opening (36) is formed at the end of an outflow line (38), at the other end of which is disposed the outlet (40).

8. Dispensing arrangement according to one of claims 2 to 6, **characterised in that** the basin-like region (28; 88) has two or more throughflow openings (94, 96), each throughflow opening (94, 96) being formed at the end of a line (100, 102) at the other end of which is disposed an inlet (98, 104) for the connection of a water-feed line.

9. Dispensing arrangement according to one of the preceding claims, **characterised in that** the dispensing body (12) has a connecting line (18) which connects the first inlet (20) to the second inlet (22) and from which the channel portion (30) branches off.

10. Dispensing arrangement according to one of claims 1 to 6 or claim 8, **characterised in that** the outlet (118) is disposed at that end of the channel portion (120) which is directed away from the valve seat (126).

11. Dispensing arrangement according to one of the preceding claims, **characterised in that** the water-channeling components of the dispensing arrangement (10; 70) are provided with a coating which inhibits bacterial growth.

12. Water-dispensing appliance with a dispensing arrangement according to one of the preceding claims.

## Revendications

1. Dispositif de distribution pour un appareil de distribution d'eau qui est conçu notamment pour distribuer de l'eau potable, ledit dispositif de distribution comportant un mécanisme à clapet (14) qui possède un corps de clapet (60) qui peut être appliqué de façon étanche contre un siège de clapet (64 ; 126), et comportant un corps de distribution (12 ; 72) qui possède une première entrée (20 ; 98) et une seconde entrée (22 ; 104) en liaison d'écoulement avec la première entrée (20 ; 98), afin de raccorder des conduites d'amenée d'eau, ainsi qu'une sortie (40 ; 118) qui est destinée à délivrer de l'eau et qui est en liaison d'écoulement avec la première entrée (20 ; 98) et la seconde entrée (22 ; 104), la liaison d'écoulement entre les deux entrées (20, 22 ; 98, 104) et la sortie (40 ; 118) étant effectuée par une portion de canal (30 ; 120) qui porte à une extrémité frontale (26 ; 116) le siège de clapet (64 ; 126) destiné au corps de clapet (60), le siège de clapet (64 ; 126) formant un élément de déviation d'écoulement destiné à modifier d'au moins 90° la direction d'écoulement de l'eau s'écoulant de la première entrée (20 ; 98) et/ou de la seconde entrée (22 ; 104) vers la sortie (40 ; 118), le mécanisme à clapet (14) étant formé en clapet électromagnétique et présentant une bobine (56) avec un noyau de bobine (58) monté à l'intérieur, le noyau de bobine formant le corps de clapet (60), et le corps de distribution (12 ; 72) étant formé d'une seule pièce et étant fabriqué d'un matériau thermiquement conducteur et thermiquement stable à une température nécessaire à la pasteurisation de l'eau.

2. Dispositif de distribution selon la revendication 1, **caractérisé en ce que** le corps de distribution (12 ; 72) possède une région (28 ; 88) en forme de cuvette dans laquelle la portion de canal (30 ; 120) avance par son extrémité (26 ; 116) formant le siège de clapet (64 ; 126) et qui comporte au moins une ouverture d'écoulement (36 ; 94, 96) par laquelle de l'eau peut s'écouler de la première entrée (20 ; 98) ou de la seconde entrée (22 ; 104) vers la sortie (40 ; 118) lorsque le corps de clapet (60) ne s'applique pas contre le siège de clapet (64 ; 126).

3. Dispositif de distribution selon la revendication 2, **caractérisé en ce que** le corps de clapet (60) est orienté coaxialement à la portion de canal (30 ; 120) et est déplaçable par rapport à celle-ci, ledit corps de clapet pénétrant dans la région (28 ; 88) en forme de cuvette afin de s'appliquer contre le siège de clapet (64 ; 126) depuis le côté opposé à la portion de canal (30 ; 120).

4. Dispositif de distribution selon la revendication 2 ou 3, **caractérisé en ce que** la région (28; 88) en forme de cuvette a une forme cylindrique et est orientée coaxialement à la portion de canal (30 ; 120).

5. Dispositif de distribution selon l'une des revendications 2 à 4, **caractérisé en ce que** le corps de distribution (12 ; 72) présente une surface d'appui (48 ; 122) qui est disposée au niveau de la région (28 ; 88) en forme de cuvette et contre laquelle porte le mécanisme à clapet (14).

6. Dispositif de distribution selon la revendication 5, **caractérisé en ce que** la surface d'appui (48 ; 122) entoure le bord du côté, opposé à la portion de canal (30 ; 120), de la région (28 ; 88) en forme de cuvette.

7. Dispositif de distribution selon l'une des revendications 2 à 6, **caractérisé en ce que** l'au moins une ouverture d'écoulement (36) est formée à l'extrémité d'une conduite de décharge (38) à l'autre extrémité de laquelle est disposée la sortie (40).

8. Dispositif de distribution selon l'une des revendications 2 à 6, **caractérisé en ce que** la région (88) en forme de cuvette possède deux ouvertures d'écoulement (94, 96) ou plus, chaque ouverture d'écoulement (94, 96) étant formée à l'extrémité d'une conduite (100, 102) à l'autre extrémité de laquelle est disposée une entrée (98, 104) destinée au raccordement d'une conduite d'amenée d'eau.

9. Dispositif de distribution selon l'une des revendications précédentes, **caractérisé en ce que** le corps de distribution (12) comporte une conduite de liaison (18) qui relie la première entrée (20) à la seconde entrée (22) et de laquelle dérive la portion de canal (30).

10. Dispositif de distribution selon l'une des revendications 1 à 6 ou la revendication 8, **caractérisé en ce que** la sortie (118) est disposée à l'extrémité, opposée au siège de clapet (126), de la portion de canal (120).

11. Dispositif de distribution selon l'une des revendications précédentes, **caractérisé en ce que** les composants d'écoulement d'eau du dispositif de distribution (10 ; 70) sont dotés d'un revêtement empêchant le développement de germes.

12. Appareil de distribution d'eau comportant un dispositif de distribution selon l'une des revendications précédentes.
